# EUROPEAN PATENT SPECIFICATION

(11) **EP 2 207 832 B1**
(45) Date of publication and mention of the grant of the patent: **16.11.2011**
(21) Application number: 08802004.5
(22) Date of filing: 11.09.2008
(51) Int. Cl.: C08G 18/28, C08F 214/18, D06M 15/576, D06M 15/277, D06M 15/647

(54) **COMPOSITIONS COMPRISING FLUORINE-CONTAINING POLYMER AND SILOXANE**
FLUORHALTIGES POLYMER UND SILOXAN ENTHALTENDE ZUSAMMENSETZUNGEN
COMPOSITIONS COMPRENANT UN POLYMÈRE CONTENANT DU FLUOR ET UN SILOXANE

(30) Priority: 15.09.2007 EP 07018157; 02.08.2008 DE 102008035906
(43) Date of publication of application: 21.07.2010
(73) Proprietor: Huntsman Textile Effects (Germany) GmbH, 86462 Langweid a. Lech (DE)
(72) Inventor: LÜDEMANN SIMPERT, 86399 Bobingen (DE); NIEDERSTADT, Rule, 86157 Augsburg (DE); RIEDMANN, Jürgen, 86157 Augsburg (DE); WILSON, Daniel, 86169 Augsburg (DE)
(86) International application number: PCT/EP2008/007443
(87) International publication number: WO 2009/039961

(56) References cited:
- EP-A- 1 264 863
- WO-A-03/089712
- WO-A-2005/103362
- US-A1- 2007 166 475

## Description

The invention relates to compositions which comprise water, at least one polymer with one or more perfluoroalkyl groups (RF groups) and at least one siloxane. It further relates to a process for treating fiber materials, where a composition of the specified type is applied to a fiber material.

It is known to treat fiber materials, such as, for example, wovens or knitted materials or nonwovens with compositions which comprise polymers which have one or more perfluoroalkyl groups (RF groups). This treatment can impart oil-repellency properties to the fiber materials.

Such processes are described, inter alia, in FR-A 2 213 333, DE-A 2 702 632 and EP-A 234 724.
WO 2006/071 442 A1 describes "release compositions" for "release layers" and articles with "adhesive" properties. These compositions comprise relatively small amounts of a fluorine polymer, namely at most 5% by weight, and considerably larger amounts of fluorine-free polymers. The RF groups in the fluorine polymers are exclusively short-chain. WO 2004/069 919 A2 discloses mixtures which comprise fluorine polymers and siloxanes. The fluorine polymers are based on PTFE or PTFE copolymers. The siloxanes are copolymers which contain polyoxyalkylene units in the main chain but not in side chains. The purpose of these siloxanes consists in the stabilization of the fluorine polymer compositions.
Finally, WO 03/089 712 A1 discloses compositions which comprise polyurethanes having RF groups and siloxanes. The RF-polyurethanes are formed (see claim 1) by reacting isocyanates having at least 3 NCO groups with monofunctional compounds which contain an RF group. The compositions have to further comprise copolymers of the type RF-(meth)acrylate/polyoxyalkylene (meth)acrylate; the latter have the function of fluorine-containing surfactants. The compositions of this WO serve primarily for the finishing of carpets in order to impart oil-/water-repellency properties thereto. In example 3 of this WO, a composition is specified which, apart from fluorine polymer, also comprises a relatively large amount of siloxane. The weight ratio of fluorine polymer to siloxane is about 100 : 57. The purpose of adding siloxane lies, according to the details of this specification, in an "extender effect", namely in a partial replacement of the expensive RF polymer by the more cost-effective siloxane.

There is a series of strict requirements for articles made of nonwovens, of polyolefins, in particular of polypropylene-SMS nonwovens (spunbond-meltblown-spunbond), which are intended for use in the medical sector. Thus, the finished nonwovens have to have oil- and water-repellency properties, and in the so-called "EDANA test", which is described below, they must also attain at least grade 9, better still grade 10, specifically in relation to the repellency of isopropanol. These nonwovens must thus repel isopropanol virtually quantitatively, i.e. they must not be wetted by isopropanol or must only be wetted to an insignificant degree, i.e. they have to have a barrier to solvent-containing substances.
A further requirement which is placed on said polypropylene nonwovens is that, in the so-called "water column test", which is likewise described below, the height of the water column in the case of the nonwovens treated with polymer compositions, must have a value of at least 60% of the original height, i.e. the height before treatment.
It has been found that with compositions which are known from the prior art and which comprise fluorine polymers, the specified requirements are not met or not adequately met since either the repellent effect toward isopropanol or that toward water is insufficient.
However, if compositions comprise polymers with RF groups but no relatively short-chain siloxanes, the isopropanol repellency of treated polypropylene nonwovens is inadequate. If an excessively large amount of siloxane is present in the compositions, then the requirements of the "water column test" are not met. The latter applies, for example, to the formulation according to example 3 of WO 03/089 712 A1.

It was the object of the present invention to provide compositions with which nonwovens made of polyolefins, in particular of polypropylene, can be treated and where these nonwovens, following the treatment, have excellent results with regard to repellency of isopropanol (according to "EDANA test") and with regard to penetration of water (according to "water column test"). It was also an object of the invention to provide a process for treating fiber materials, in particular nonwovens made of polypropylene, with which articles can be obtained which produce excellent results in the "EDANA test" (repellency of isopropanol) and in the "water column test" (penetration of water into the fiber material).

The object was achieved by a composition which comprises water and at least one component A and at least one component B, where component A is either a polyurethane which can be obtained by reacting a divalent isocyanate with a dihydric alcohol, which contains at least one perfluoroalkyl group RF of the formula (I) 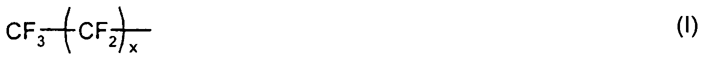 in which x is a number from 5 to 23, preferably from 7 to 19, where neither the divalent isocyanate nor the dihydric alcohol contains polyoxyalkylene groups,
or
where component A is a polymeric (meth)acrylic acid ester which contains polymerized units of the formula (II), 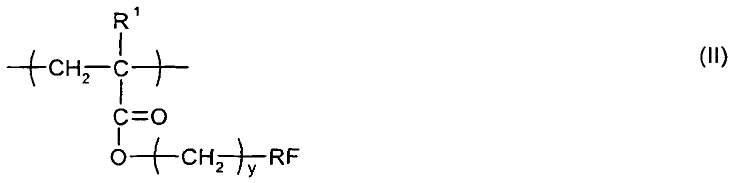 in which RF has the meaning given above, R¹ is H or CH₃, and y is a number from 2 to 4, or where component A is a mixture which comprises one or more of said polyurethanes and/or one or more of said (meth)acrylic acid esters,
where component B is a siloxane of the formula (III) or a mixture of such siloxanes 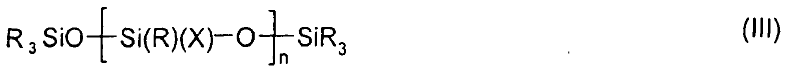 where all of the radicals R, independently of one another, are CH₃-, CH₃CH₂- or C₆H₅-,
n is a number from 1 to 5,
all of the radicals X, independently of one another, are R or a radical of the formula (IV) 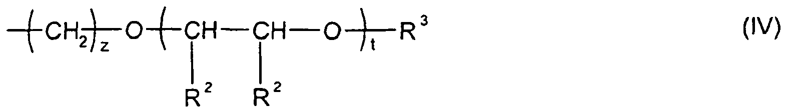 where R³ is H or an alkyl radical having 1-4 carbon atoms, in particular H or methyl, but where at least one of all of the radicals X is a radical of the formula (IV), where in each of the units 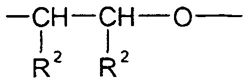 one of the radicals R² is hydrogen and the other is hydrogen or a methyl group, where z is a number from 2 to 4 and preferably has the value 3,
where t is a number from 2 to 12, preferably a number from 6 to 12,
where the composition comprises 10 to 70% by weight of component A,
where the weight ratio of component A to component B in the composition is in the range from 100 : 5 to 100 : 35, preferably in the range from 100 : 13 to 100 : 25, and also by a process for treating fiber materials, where a composition of the specified type is applied to the fiber materials.

A particular advantage of compositions according to the invention is that they can be applied to nonwovens made of polypropylene without the surface of the polypropylene having to be chemically modified beforehand, as is the case with many known processes.

The compositions according to the invention are very well suited to being applied to fiber materials and in this connection producing fiber materials which have good alcohol-, oil- and water-repellency properties. Fiber materials which can be used are fabrics in the form of wovens, knits or nonwovens. They can consist of natural or synthetic fibers and mixtures of such fibers. Of particular suitability are compositions according to the invention for treating nonwovens, with a particularly preferred embodiment consisting in applying compositions according to the invention which consist completely or predominantly, i.e. of 80 to 100% by weight, of polyolefin, in particular of polypropylene, to nonwovens. In this way, it is possible to produce nonwovens of polypropylene fibers which are exceptionally suitable for use in the medical sector and which meet the strict requirements imposed therein. These requirements consist firstly in the fact that in the test according to the so-called "EDANA test", which is explained below, the nonwovens normally have to attain grade 9, but preferably grade 10, which relates to the repellency of isopropanol. Recently, a grade of 8 has also been accepted by the market. Secondly, in the so-called "water column test", the water column which arises in the case of the nonwovens treated with compositions according to the invention after they have been dried must be at least 60% of the height which the water column had on the untreated samples. The two test methods mentioned will now be explained.

### 1. EDANA test

This test gives information about which alcohol-repellency properties fabrics made of fiber materials have toward low molecular weight alcohols. The test is carried out with regard to the repellency of isopropanol, as is described in the paper "Standard Test: WSP 80.8 (05), Standard Test Method for Alcohol Repellency of Nonwoven Fabrics", edition 2005, of the "European Disposables and Nonwovens Association". The description of this test method is given in "World Wide Strategic Partner: Standard Test Methods for Nonwovens Industry. Author: INDA and EDANA". The test solutions used were mixtures of isopropanol/water with different mixing ratios. The result of the test is expressed in grades from 0 to 10, with higher grades denoting more effective repellency of isopropanol.

### 2. Water column test

The test gives information about hydrophilic properties of substrates. It was carried out in accordance with DIN ISO 811 (EN 20811), edition August 1992. The resistance of textiles to the penetration of water is measured by ascertaining the hydrostatic pressure height (height of the water column) which a fabric withstands. The higher the water column at which penetration through the textile takes place for the first time, the less hydrophilic the substrate.

It has been found that the treatment of nonwovens made of polypropylene with RF polymers alone, i.e. without co-use of siloxanes of the formula (III) results in inadequate repellency of isopropanol. This finding is particularly surprising since it was not to be expected that the relatively nonpolar RF polymer exhibits a lower repellency toward isopropanol then its combination with the hydrophilic siloxane.

It has been found that with regard to the use as component B, a careful selection of siloxanes has to take place and that in addition the mixing ratio of component A to component B in compositions according to the invention must be within a narrow range. Otherwise, the strict requirements with regard to "EDANA test" and "water column test" cannot be met.

Often, it is desired or even required if the fiber materials treated with compositions according to the invention additionally have antielectrostatic properties. This can be achieved by also additionally applying an antistatic agent or a mixture of antistatic agents to the fiber materials besides compositions according to the invention. Suitable antielectrostatic products are known to the person skilled in the art and available on the market. Of suitability are, inter alia, products based on customary, known organic phosphorus compounds (e.g. phosphoric acid esters).

In the case of the preferred embodiment of the process according to the invention described below, in which a composition according to the invention is applied to a fiber material in the form of a foam, an antielectrostatic agent can be mixed with the composition before foaming takes place. The required amount of antistatic agent depends on the specific conditions and can be readily ascertained through a few experiments.

Compositions according to the invention have to comprise water and at least one component A and one component B. In addition, further constituents may also be present.
As component A it is possible to use an individual polymer or a mixture of polymers, each of which corresponds to the description below.

Component A is a polymer which contains at least one perfluoroalkyl group, the latter also being referred to below as RF group. The polymer can also contain a plurality of groups RF. RF here is a radical of the formula (I).

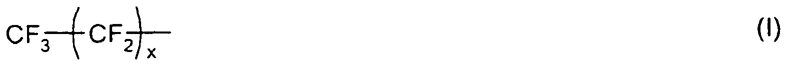

In this formula, x is a number from 5 to 23, preferably x has a value in the range from 7 to 19. These values are average values since, on account of the molecular weight distribution during polymer syntheses, individual values of x can differ from one another if the average value of x is less than 5, the oil repellency of the finished materials is inadequate, as is the repellency toward isopropanol.

The polymers with RF groups which are suitable as component A are polyurethanes or poly(meth)acrylate esters. In the case of these (meth)acrylates, the alcohol component on the chain end has a radical RF, these are thus compounds which contain polymerized units of the formula (II) 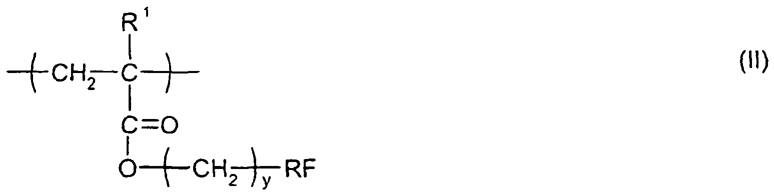 in which y is a number from 2 to 4 and R¹ is hydrogen or the methyl group. RF has the meaning given above.
Apart from (meth)acrylates, polyurethanes with groups RF are also highly suited as component A; these can be obtained by reacting divalent isocyanates with dihydric alcohols.

If component A is a polymeric (meth)acrylic acid ester, besides units of the aforementioned formula (II), this polymeric ester can also contain further polymerized units which originate from different monomers. Examples of such monomers which can be additionally incorporated are fluorine-free alkyl (meth)acrylic acid esters, vinylidene chloride, 3-chloro-2-hydroxypropyl (meth)acrylate, styrene, (meth)acrylamide, which is optionally substituted, e.g. N-methylolacrylamide. The product PHOBOL^{®} NW from Huntsman Textile Effects (Germany) GmbH comprises a polymeric (meih)acryiic acid ester suitable as component A.
Polymers suitable as component A are known to the person skilled in the art and commercially available, e.g. from Du Pont. Suitable products and their preparation can be found in the literature, e.g. in the specifications EP-A 1 088 929, US-A 3 491 169, US-A 3 818 074, US-A 5 214 121, EP-A 348 350, US-A 3 968 066 and US-A 4 054 592 and in the European patent application No. 07012551.3.

From the group of polyurethanes, only those polyurethanes which can be obtained by reacting divalent isocyanates with dihydric alcohols, where each dihydric alcohol used contains at least one RF group are suitable as component A. If the isocyanates used as starting compounds contain more or fewer than two NCO groups and/or the alcohols used contain more or fewer than 2 OH groups, then no polymers suitable as component A are formed.
In addition, neither the divalent isocyanates used as starting compounds, nor the dihydric alcohols used as starting compounds must contain polyoxyalkylene groups. They are thus in particular free from polyoxyethylene units. The (meth)acrylate esters which can be used as component A must also be free from polyoxyalkylene units. This is because it has been found that the fiber materials treated with compositions according to the invention would have inadequate water-repellency properties according to "water column test" if component A comprises polyoxyalkylene groups.
All of the other products present in compositions according to the invention are also preferably free from polyoxyalkylene groups, with the exception of a certain content of polyoxyalkylene units in component B and optionally in a dispersant. Besides components A and B, yet further components may additionally be present in compositions according to the invention, e.g. fluorine-free polymers, flame retardants, dispersants or dispersant mixtures. All of these additionally used products with the exception of dispersants are preferably free from polyoxyethylene groups and also the fraction of polyoxyethylene units originating from dispersants in compositions according to the invention should only be as high as is absolutely necessary.

If polymeric (meth)acrylate esters are to be used as component A, then these can be prepared by known methods by reaction of (meth)acrylic acid or derivatives thereof with monoalcohols which have an RF group of said type at one chain end, and then free-radical polymerization using a customary free-radical initiator.
Highly suitable monoalcohols for said reaction are compounds of the formula 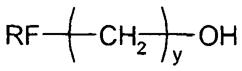 in which RF has the meaning given above and y is a number from 2 to 4.
In the reaction of the (meth)acrylic acid or derivative thereof with monoalcohol and subsequent polymerization, optionally with co-use of further unsaturated monomers, polymers are thus formed which contain polymerized units of the formula (II).

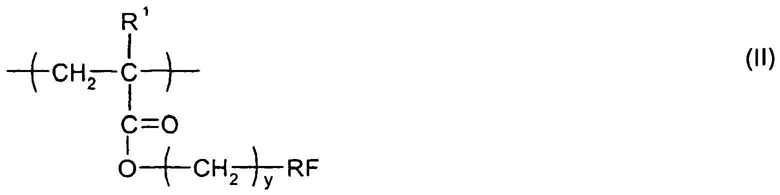

These are suitable as component A.

Component A must not be a uniform polymer. Instead, mixtures can also be used which comprise one or more polyurethanes and/or one or more polyacrylates of the specified types.

Compositions according to the invention which comprise a polymeric (meth)acrylic acid ester, in particular a copolymer, or a mixture of such polymeric esters as component A are particularly well suited.

Component B of compositions according to the invention is a siloxane of the formula (III) or a mixture of such siloxanes.

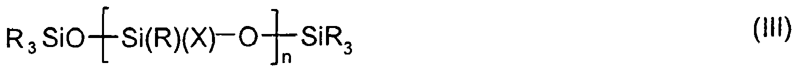

In this formula (III), all of the radicals R, independently of one another, are a methyl or ethyl or phenyl group. Preferably, 80 to 100% of all of the radicals R present are methyl groups.
In formula (III), n has a value from 1 to 5. Siloxanes in which n = 1 are particularly well suited. If n assumes greater values than 5, no siloxanes suitable as component B are present.
All of the radicals X in formula (III) are, independently of one another, a radical R of the specified type or are a radical of the formula (IV). 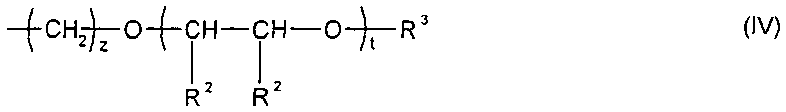 where R³ is H or an alkyl radical with 1-4 carbon atoms, in particular H or methyl.

At least one of all of the radicals X present, however, must be a radical of the formula (IV). In formula (IV), z is a number from 2 to 4, t is a number from 2 to 12, preferably from 6 to 12. In each unit 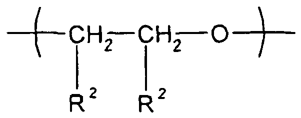 of formula (IV), one of the radicals R² is H and the other is H or CH₃.

In a preferred embodiment of compositions according to the invention, component B is a compound of the formula (VI) 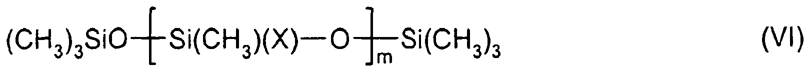 or a mixture of such compounds,
where m is a number from 1 to 4,
a radical X is a radical of the formula (IV) as stated above and all of the other optionally present radicals X are CH₃-.

In a particularly preferred embodiment of compositions according to the invention, component B is a compound of the formula (V) 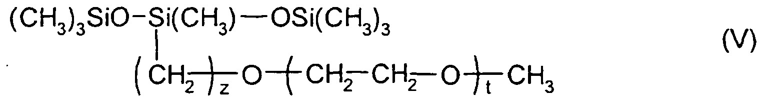 or a mixture of such compounds,
where z and t have the meanings given above.

Siloxanes of the formula (III), (V) and (VI) are commercially available and can be prepared by methods as are known to the person skilled in the art in the field of silicone chemistry. Such siloxanes can be obtained from Wacker Chemie AG or Evonik Goldschmidt GmbH.

In order to achieve the advantages of compositions according to the invention during the treatment of nonwovens made of polyolefins, it is necessary to observe certain quantitative ranges for water and the components A and B. The compositions must comprise 10 to 70% by weight of component A. In addition, the weight ratio of component A to component B must be in the range from 100 : 5 to 100 : 35. Particular preference in this connection is given to a range from 100 : 13 to 100 : 25.

With regard to the relative fractions of the individual ingredients of compositions according to the invention, these can fluctuate within certain ranges. For example, compositions which have a content of fluorine (calculated as element F) in the range from 3.5 to 6.5% by weight and in which the weight ratio of water to component A is in the range from 1.3 : 1 to 2 : 1 are well suited. Compositions of this type are easy to prepare and can be readily stored. For the use in the treatment of nonwovens made of polypropylene, it is advantageous to further dilute these specified compositions with water. A particularly preferred embodiment of compositions according to the invention is therefore one in which it comprises water and component A in the weight ratio from 4 : 1 to 6 : 1. Compositions of this type can be readily foamed mechanically and applied as foam to fiber materials, which is a preferred method for the application of compositions according to the invention.

Compositions according to the invention can be prepared in a simple manner by mixing water, component A and component B at room temperature or, if appropriate, somewhat elevated temperature. If appropriate, further products are added to the compositions, such as, for example, antistatic agents, flame retardants etc. The individual constituents are normally mixed using a mechanical stirring operation. It is often possible, when selecting suitable quantitative ratios of the individual components, to foam compositions according to the invention and to apply them in the form of thus resulting foams to the fiber materials. This application method is preferred. In this way, it is possible to apply relatively small amounts of water to the fiber materials. The advantage compared with conventional bath applications is, inter alia, that then less time and energy is required in order to remove the water again from the fiber materials. High processing rates can therefore be achieved. The mentioned foaming can be carried out without additional use of a foam-forming agent through mechanical agitation with admittance of air, and devices known for this purpose are suitable. Thus, foams with a weight, for example, of from 20 to 100 g/l can be obtained.
The foam can be applied to the fiber material, e.g. to the nonwoven, using conventional foam applicators at room temperature.

Following the treatment with compositions according to the invention, the fiber materials are dried in a known manner, e.g. at a temperature in the range from 80 to 120°C. Subsequently, a condensation can be carried out at a further elevated temperature, e.g. a temperature in the range from 120 to 140°C. Preferably, the drying and condensation can be completed in one operation in order to thereby increase the productivity and save energy. At high commodity rates and under optimum drying/condensation conditions, the time can be just a few seconds.

Besides the mentioned use of nonwovens in the medical sector, fiber materials treated with compositions according to the invention can also be used in other sectors, e.g. in geotextiles, awnings or tarpaulins.

The invention will now be illustrated by working examples.

One of the following formulations was applied in each case to a sample of a polypropylene-SMS nonwoven with a weight per unit area of 60 g/m².

### Formulation 1 (not according to the invention):

350 g/l of a standard commercial polyacrylate dispersion (OLEOPHOBOL SL-A01, Huntsman Textile Effects (Germany) GmbH, corresponding to component A) 1 g/l of a standard commercial foamer.

Formulation 1 thus comprised no component B. The polyacrylate dispersion (component A) was an aqueous dispersion which comprised about 12% by weight of a polyacrylate with RF groups.

### Formulation 2 (according to the invention):

350 g/l of the same polyacrylate dispersion as in formulation 1
10 g/l of a siloxane of the aforementioned formula (III) (Wacker Silicone Oil L 066, corresponding to component B).

### Formulation 3 (not according to the invention):

350 g/l of the same polyacrylate dispersion as in formulation 1
10 g/l of a long-chain polysiloxane with essentially more than 10 polyoxyethylene units in one side chain. This polysiloxane does not fall under the definition of component B.

### Formulation 4 (according to the invention):

350 g/l of PHOBOL^{®} NW from Huntsman Textile Effects (Germany) GmbH, an aqueous dispersion which comprised about 14% by weight of a polyacrylate with RF groups, corresponding to component A
10 g/I of a siloxane of the aforementioned formula (III) (Wacker Silicone Oil L 066, corresponding to component B).

### Formulation 5 (not according to the invention):

350 g/l of the same polyacrylate dispersion as in formulation 1
41 g/l of Silwet L-77^{®} surfactant (GE Silicones, corresponding to component B).

All of the formulations were converted to a foam with a weight of 60 g/I using a foaming apparatus. Only in the case of formulation 1 was the addition of a foamer necessary. The foams were then each applied to a sample of the polypropylene nonwoven in an amount such that the nonwoven had a 20% higher weight after application than the untreated nonwoven.
Following application of the foam formulations, the treated nonwovens were dried at 120°C for one minute. Then, in each case, the alcohol repellency (isopropanol) was ascertained according to the EDANA test, and the water column test was carried out. The results are given in the table below:

| Formula No. | EDANA test, grade | Water column height |
|---|---|---|
| Comparison: untreated nonwoven | 2 | 700 mm |
| 1 | 5 | 300 mm |
| 2 | 10 | 550 mm |
| 3 | 5 | 300 mm |
| 4 | 10 | 550 mm |
| 5 | 10 | 100 mm |

It is obvious that the nonwovens treated with the formulations 2 or 4 according to the invention are superior to the nonwovens which have been treated with the formulations 1, 3 or 5. Not only is the repellency effect toward isopropanol significantly better in the case of the nonwovens treated with the formulations 2 and 4 (grade 10 as opposed to 5) but the nonwovens treated with the formulations 2 and 4 are the only ones to meet the requirement that the height of the water column should have at least 60% of the value which the untreated nonwoven sample exhibits in the water column test. It can be seen from example 5 not according to the invention that in the case of a higher fraction of component B in the formulation, the requirements with regard to "water column test" are no longer met.

## Claims

1. A composition which comprises water and at least one component A and at least one component B,
where component A is either a polyurethane which can be obtained by reacting a divalent isocyanate with a dihydric alcohol which contains at least one perfluoroalkyl group RF of the formula (I) 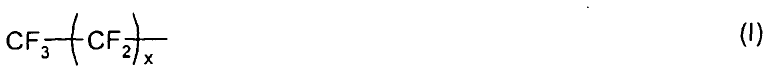 in which x is a number from 5 to 23, preferably from 7 to 19, where neither the divalent isocyanate nor the dihydric alcohol contains polyoxyalkylene groups or, preferably, where component A is a polymeric (meth)acrylic acid ester which contains polymerized units of the formula (II), 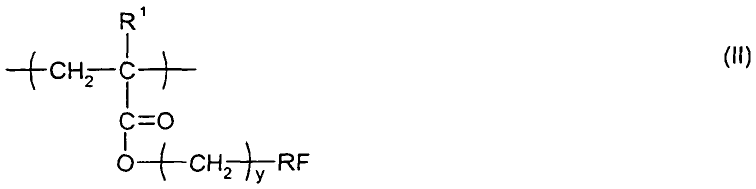 in which RF has the meaning given above, R¹ is H or CH₃ and y is a number from 2 to 4, or where component A is a mixture which comprises one or more of said polyurethanes and/or one or more of said (meth)acrylic acid esters,
where component B is a siloxane of the formula (III) or a mixture of such siloxanes 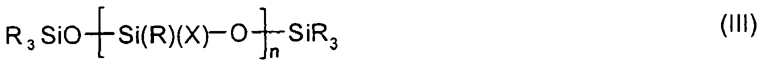 where all of the radicals R, independently of one another, are CH₃-, CH₃CH₂- or C₆H₅-,
n is a number from 1 to 5,
all of the radicals X, independently of one another, are R or a radical of the formula (IV) 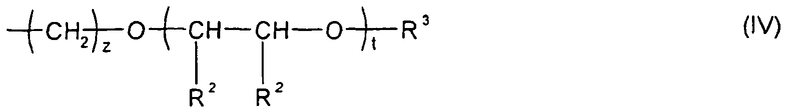 where R³ is H or an alkyl radical having 1-4 carbon atoms, in particular H or methyl, but where at least one of all of the radicals X is a radical of the formula (IV), where in each of the units 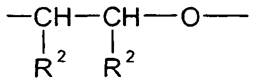 one of the radicals R² is hydrogen and the other is hydrogen or a methyl group, where z is a number from 2 to 4 and preferably has the value 3,
where t is a number from 2 to 12, preferably a number from 6 to 12,
where the composition comprises 10 to 70% by weight of component A,
where the weight ratio of component A to component B in the composition is in the range from 100 : 5 to 100 : 35, preferably in the range from 100 : 13 to 100 : 25.

2. The composition as claimed in claim 1, **characterized in that** component A is a polymeric (meth)acrylic acid ester which is present in the form of a copolymer or a mixture of such polymeric esters.

3. The composition as claimed in claim 1 or 2, **characterized in that** component B is a compound or a mixture of compounds of the formula (VI), 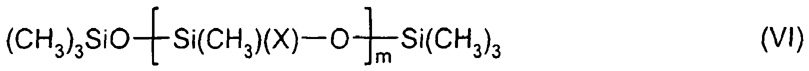 where m is a number from 1 to 4,
a radical X is a radical of the formula (IV) as given in claim 1 and all of the other optionally present radicals X are CH₃-.

4. The composition as claimed in one or more of claims 1 to 3, **characterized in that** component B is a compound or a mixture of compounds of the formula (V), 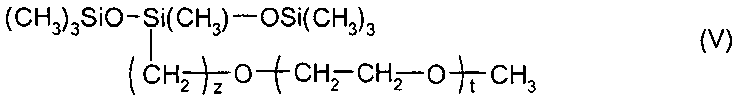 where z and t have the meaning given in claim 1.

5. The composition as claimed in one or more of claims 1 to 4, **characterized in that** it comprises water and component A in the weight ratio from 4 : 1 to 6 : 1.

6. A process for the treatment of fiber materials, where a composition as claimed in any of claims 1 to 5 is applied to the fiber materials.

7. The process as claimed in claim 6, **characterized in that** the fiber materials are nonwovens.

8. The process as claimed in claim 6 or 7, **characterized in that** the fiber materials consist of 80 to 100% by weight of polyolefin, preferably of polypropylene.

9. The process as claimed in one or more of claims 6 to 8, **characterized in that** the composition is applied to the fiber materials in the form of a foam.

10. The process as claimed in one or more of claims 6 to 9, **characterized in that** the composition additionally comprises an antistatic agent.

## Patentansprüche

1. Zusammensetzung, welche Wasser und mindestens eine Komponente A und mindestens eine Komponente B enthält,
wobei Komponente A entweder ein Polyurethan ist, das sich erhalten lässt durch Umsetzung eines zweiwertigen Isocyanats mit einem zweiwertigen Alkohol, welcher mindestens eine Perfluoralkylgruppe RF der Formel (I) 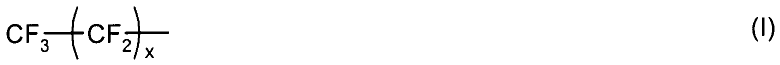 enthält, worin x eine Zahl von 5 bis 23, vorzugsweise von 7 bis 19 ist, wobei weder das zweiwertige Isocyanat noch der zweiwertige Alkohol Polyoxyalkylengruppen enthält, oder, was bevorzugt ist, wobei Komponente A ein polymerer (Meth-)Acrylsäureester ist, der einpolymerisierte Einheiten der Formel (II) enthält, 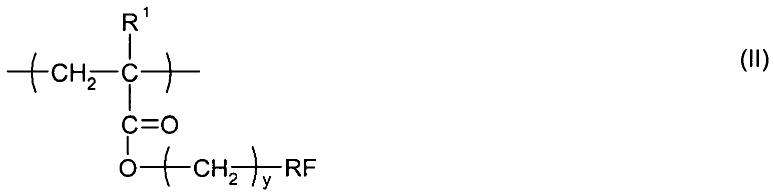 worin RF die oben genannte Bedeutung besitzt, R¹ für H oder CH₃ steht und y eine Zahl von 2 bis 4 ist, oder wobei Komponente A ein Gemisch ist, das eines oder mehrere der genannten Polyurethane und/oder einen oder mehrere der genannten (Meth-)Acrylsäureester enthält,
wobei Komponente B ein Siloxan der Formel (III) oder ein Gemisch solcher Siloxane ist 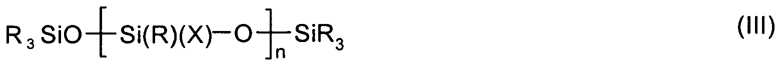 wobei alle Reste R unabhängig voneinander für CH₃-, CH₃CH₂- oder C₆H₅- stehen,
n eine Zahl von 1 bis 5 ist,
alle Reste X unabhängig voneinander für R oder einen Rest der Formel (IV) stehen 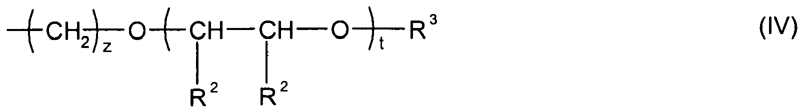 wobei R³ für H oder einen Alkylrest mit 1-4 Kohlenstoffatomen, insbesondere für H oder Methyl, steht, wobei jedoch mindestens einer aller Reste X für einen Rest der Formel (IV) steht,
wobei in jeder der Einheiten 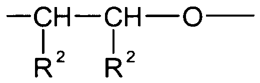 einer der Reste R² für Wasserstoff und der andere für Wasserstoff oder eine Methylgruppe steht, wobei z eine Zahl von 2 bis 4 ist und vorzugsweise den Wert 3 besitzt,
wobei t eine Zahl von 2 bis 12 ist, vorzugsweise eine Zahl von 6 bis 12,
wobei die Zusammensetzung 10 bis 70 Gew% an Komponente A enthält,
wobei das Gewichtsverhältnis von Komponente A zu Komponente B in der Zusammensetzung im Bereich von 100 : 5 bis 100 : 35 liegt, vorzugsweise im Bereich von 100 : 13 bis 100 : 25.

2. Zusammensetzung nach Anspruch 1, **dadurch gekennzeichnet, dass** Komponente A ein polymerer (Meth-)Acrylsäureester ist, der in Form eines Copolymeren oder eines Gemisches solcher polymerer Ester vorliegt.

3. Zusammensetzung nach Anspruch 1 oder 2, **dadurch gekennzeichnet, dass** Komponente B eine Verbindung oder ein Gemisch von Verbindungen der Formel (VI) ist, 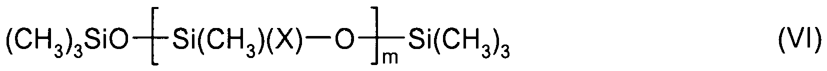 wobei m eine Zahl von 1 bis 4 ist,
ein Rest X für einen Rest der Formel (IV) wie in Anspruch 1 angegeben steht und alle anderen ggf. anwesenden Reste X für CH₃- stehen.

4. Zusammensetzung nach einem oder mehreren der Ansprüche 1 bis 3, **dadurch gekennzeichnet, dass** Komponente B eine Verbindung oder ein Gemisch von Verbindungen der Formel (V) ist, 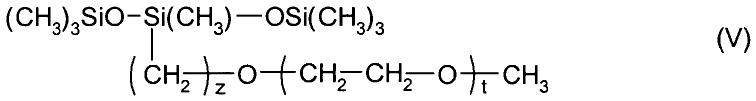 wobei z und t die in Anspruch 1 angegebene Bedeutung haben.

5. Zusammensetzung nach einem oder mehreren der Ansprüche 1 bis 4, **dadurch gekennzeichnet, dass** sie Wasser und Komponente A im Gewichtsverhältnis von 4 : 1 bis 6 : 1 enthält.

6. Verfahren zur Behandlung von Fasermaterialien, wobei man auf die Fasermaterialien eine Zusammensetzung gemäß einem der Ansprüche 1 bis 5 aufbringt.

7. Verfahren nach Anspruch 6, **dadurch gekennzeichnet, dass** die Fasermaterialien Nonwovens (Vliese) sind.

8. Verfahren nach Anspruch 6 oder 7, **dadurch gekennzeichnet, dass** die Fasermaterialien zu 80 bis 100 Gew% aus Polyolefin, vorzugsweise aus Polypropylen, bestehen.

9. Verfahren nach einem oder mehreren der Ansprüche 6 bis 8, **dadurch gekennzeichnet, dass** die Zusammensetzung in Form eines Schaums auf die Fasermaterialien aufgebracht wird.

10. Verfahren nach einem oder mehreren der Ansprüche 6 bis 9, **dadurch gekennzeichnet, dass** die Zusammensetzung zusätzlich ein Antistatikum enthält.

## Revendications

1. Composition qui comprend de l'eau et au moins un composant A et au moins un composant B,
où le composant A est un polyuréthane qui peut être obtenu par réaction d'un isocyanate divalent avec un alcool divalent qui contient au moins un groupe perfluoroalkyle RF de la formule (I) : 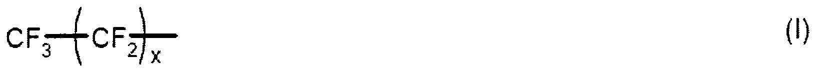 dans laquelle x est un nombre de 5 à 23, de préférence de 7 à 19, ni l'isocyanate divalent ni l'alcool divalent ne contenant des groupes polyoxyalkylène, ou bien, de préférence, où le composant A est un ester d'acide (méth)acrylique polymère qui contient des unités polymérisées de la formule (II) : 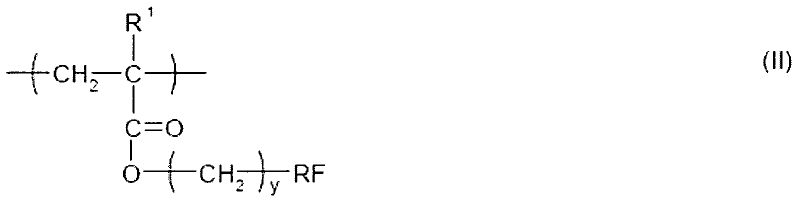 dans laquelle RF a la signification donnée ci-dessus, R¹ représente H ou CH₃ et y est un nombre de 2 à 4, ou bien où le composant A est un mélange qui comprend un ou plusieurs desdits polyuréthanes et/ou un ou plusieurs desdits esters d'acide (méth)acrylique,
où le composant B est un siloxane de la formule (III) ou un mélange de tels siloxanes : 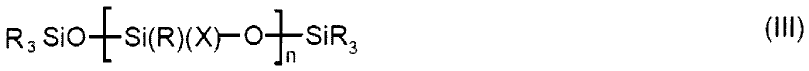 où tous les radicaux R, indépendamment les uns des autres, représentent CH₃-, CH₃CH₂- ou C₆H₅-,
n est un nombre de 1 à 5,
tous les radicaux X, indépendamment les uns des autres, représentent R ou un radical de la formule (IV) : 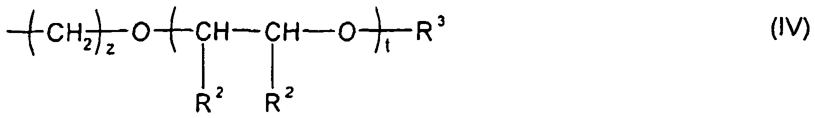 où R³ représente H ou un radical alkyle ayant 1 à 4 atomes de carbone, en particulier H ou méthyle, mais où au moins l'un de tous les radicaux X est un radical de la formule (IV) ,
où dans chacune des unités 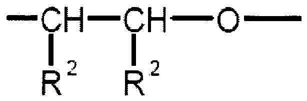 l'un des radicaux R² représente hydrogène et l'autre représente hydrogène ou un groupe méthyle,
où z est un nombre de 2 à 4 et, de préférence, a la valeur 3,
où t est un nombre de 2 à 12, de préférence un nombre de 6 à 12,
où la composition comprend 10 à 70 % en poids de composant A,
où le rapport en poids du composant A au composant B dans la composition se situe dans la plage de 100:5 à 100:35, de préférence dans la plage de 100:13 à 100:25.

2. Composition selon la revendication 1, **caractérisée par le fait que** le composant A est un ester d'acide (méth)acrylique polymère qui est présent sous la forme d'un copolymère ou d'un mélange de tels esters polymères.

3. Composition selon l'une des revendications 1 ou 2, **caractérisée par le fait que** le composant B est un composé ou un mélange de composés de la formule (VI) : 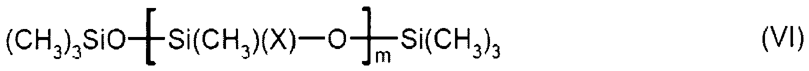 où m est un nombre de 1 à 4,
un radical X est un radical de la formule (IV) telle qu'indiquée à la revendication 1, et tous les autres radicaux X facultativement présents représentent CH₃-.

4. Composition selon l'une ou plusieurs des revendications 1 à 3, **caractérisée par le fait que** le composant B est un composé ou un mélange de composés de la formule (V) : 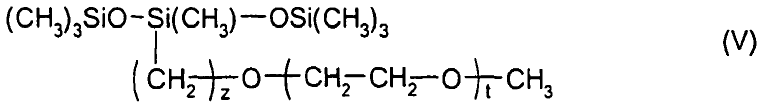 où z et t ont la signification donnée à la revendication 1.

5. Composition selon l'une ou plusieurs des revendications 1 à 4, **caractérisée par le fait qu'**elle comprend de l'eau et le composant A dans le rapport en poids de 4:1 à 6:1.

6. Procédé de traitement de matières fibreuses, dans lequel une composition selon l'une quelconque des revendications 1 à 5 est appliquée sur les matières fibreuses.

7. Procédé selon la revendication 6, **caractérisé par le fait que** les matières fibreuses sont des non-tissés.

8. Procédé selon l'une des revendications 6 ou 7, **caractérisé par le fait que** les matières fibreuses consistent en 80 à 100 % en poids de polyoléfine, de préférence de polypropylène.

9. Procédé selon l'une ou plusieurs des revendications 6 à 8, **caractérisé par le fait que** la composition est appliquée aux matières fibreuses sous la forme d'une mousse.

10. Procédé selon l'une ou plusieurs des revendications 6 à 9, **caractérisé par le fait que** la composition comprend additionnellement un agent antistatique.
